# EUROPÄISCHE PATENTANMELDUNG

(11) **EP 0 619 973 A1**
(43) Veröffentlichungstag der Anmeldung: **19.10.1994**
(21) Anmeldenummer: 94104298.8
(22) Anmeldetag: 18.03.1994
(51) Int. Cl.: A47K 3/00, A47K 3/22, B29C 51/00

(54) **Bade- oder Duschwanne**

(30) Priorität: 20.03.1993 DE 4309019
(71) Anmelder: Hüppe GmbH & Co., D-26160 Bad Zwischenahn (DE)
(72) Erfinder: Brandt, Wolfgang, D-26655 Westerstede (DE); Kirschning, Thomas, D-26203 Wardenburg (DE)
(74) Vertreter: Eisenführ, Speiser & Partner

(57) **Zusammenfassung**

Die Erfindung betrifft eine Bade- oder Duschwanne (1), bei der der Boden (4) mit Rutschhemmflächen (2) versehen ist. Erfindungsgemäß sind diese Rutschhemmflächen (2) durch Aufrauhen der Glanzoberfläche (3) des Bodens (4) gebildet.

## Beschreibung

Die Erfindung betrifft eine Bade- oder Duschwanne, bei der ein mit einer Glanzoberfläche versehener Boden mit Rutschhemmflächen versehen ist.

Zur Verminderung der Unfallgefahr durch Ausrutschen ist es bekannt, am Boden von Bade- oder Duschwannen die sonst vorhandene Glanzoberfläche durch Aufkleben von rutschhemmenden Belägen rutschsicherer zu machen. Diese Beläge sind normalerweise in Form von zueinander im Abstand angeordneten Mustern wie Streifen, Ornamenten, Ringen usw. vorgesehen. Solche aufgeklebten Beläge haben jedoch den Nachteil, daß sie über die sonst glatte Glanzoberfläche hinausstehen, hierdurch Schmutz ansammeln und nur schwer zu reinigen sind. Darüber hinaus lösen sich solche aufgeklebten Beläge nach längerem Gebrauch teilweise oder ganz von der Bodenfläche der Wanne, so daß ihre Wirkung nachläßt oder die Bodenfläche zumindest unansehnlich wird.

Der vorliegenden Erfindung liegt die Aufgabe zugrunde, eine Wanne mit rutschhemmenden Flächen zu versehen, die bei einfacher Herstellung über lange Benutzungszeiten wirksam sind, sich nicht von der Bodenfläche lösen können und leicht zu reinigen sind.

Diese Aufgabe wird gemäß der vorliegenden Erfindung dadurch gelöst, daß die vorzugsweise nur abschnittsweise vorgesehenen Rutschhemmflächen durch Aufrauhen der Glanzoberfläche gebildet sind.

Die Rutschhemmflächen werden also durch Abtrag aufgerauht; es werden also keine zusätzlichen Schichten aufgebracht. Eine solche erfindungsgemäße Maßnahme läßt sich bei allen Bade- und Duschwannen anwenden, die aus einem Material bestehen, von dessen Glanzoberfläche ohne Schaden für die sonstige Oberflächenstruktur oder das Material in dünner Schicht aufzurauhen ist. Dies ist z.B. insbesondere bei Wannen aus Acrylglas oder Polymerbeton mit Gel-Coat der Fall, jedoch auch emaillierte Stahlwannen lassen sich auf diese Weise behandeln.

Die Herstellung solcher rutschhemmenden Flächen gemäß der Erfindung kann dadurch erfolgen, daß die Rutschhemmflächen, gegebenenfalls unter Anwendung von Abdeckmasken bei partieller Anordnung der Rutschhemmflächen durch Strahlen (mit Elektrokorund, Glasperlen oder dergleichen), durch Ätzen, Bürsten oder Schleifen hergestellt sind. Bei der Herstellung der Rutschhemmflächen durch Strahlen wird vorzugsweise Elektrokorund mit einer Korngröße von ca. 0,2 mm verwendet.

Die Rutschhemmflächen können, wie an sich bei aufgeklebten Belägen bekannt, in der Form von im Abstand voneinander angeordneten parallelen Streifen vorgesehen sein, die sich z.B. in Längsrichtung einer Wanne erstrecken. Im Falle einer etwa quadratischen Duschwanne ist eine besonders vorteilhafte Ausführungsform dadurch gekennzeichnet, daß die Rutschhemmflächen in der Form von im Abstand voneinander angeordneten konzentrischen Ringen vorgesehen sind. Es ist jedoch auch möglich, die Rutschhemmflächen nicht abschnittsweise auf der Bodenfläche vorzusehen, sondern die gesamte Bodenfläche, oder sogar die gesamte Wanne mit rutschhemmender Oberfläche in der erfindungsgemäßen Art herzustellen.

Obwohl die auf erfindungsgemäße Weise angebrachten Rutschhemmflächen durch entsprechende Reinigungsmittel leicht zu reinigen sind, sind gemäß einer weiteren vorteilhaften Ausgestaltung der Erfindung die Rutschhemmflächen bei partieller Anordnung zusätzlich eingefärbt, um etwaige Verschmutzungen bis zu einem bestimmten Grad weniger auffällig zu machen. Das Einfärben kann zusammen mit der Herstellung der Rutschhemmflächen durch Beimengen von Farbpartikeln zum Behandlungspulver beim Strahlen oder dergleichen erfolgen.

Eine weitere vorteilhafte Ausführungsform ist dadurch gekennzeichnet, daß die Wanne aus zwei übereinanderliegenden Schichten, einem Trägermaterial und einer Deckschicht, besteht, wobei das Trägermaterial eingefärbt und die Deckschicht transparent ist.

In dem Fall, daß die Wanne durch Tiefziehen aus einer Acrylglasplatte oder dergleichen hergestellt wird, kann die Anbringung der Rutschhemmflächen zweckmäßigerweise vor dem Tiefziehen erfolgen.

Die Erfindung wird nachfolgend anhand mehrerer Ausführungsbeispiele unter Bezug auf die beigefügten Zeichnungen näher erläutert.

Es zeigen:
- Figur 1: die Draufsicht auf eine Badewanne mit erfindungsgemäß vorgesehenen Rutschhemmflächen in erster Form;
- Figur 2: die Draufsicht auf eine etwa quadratische Duschwanne mit Rutschhemmflächen in einer zweiten Form;
- Figur 3: eine vergrößerte Schnittansicht entlang der Linien III-III der Figuren 1 und 2; und
- Figur 4: eine ähnliche Schnittansicht durch den Boden einer zwischenschichtig aufgebauten Wanne.

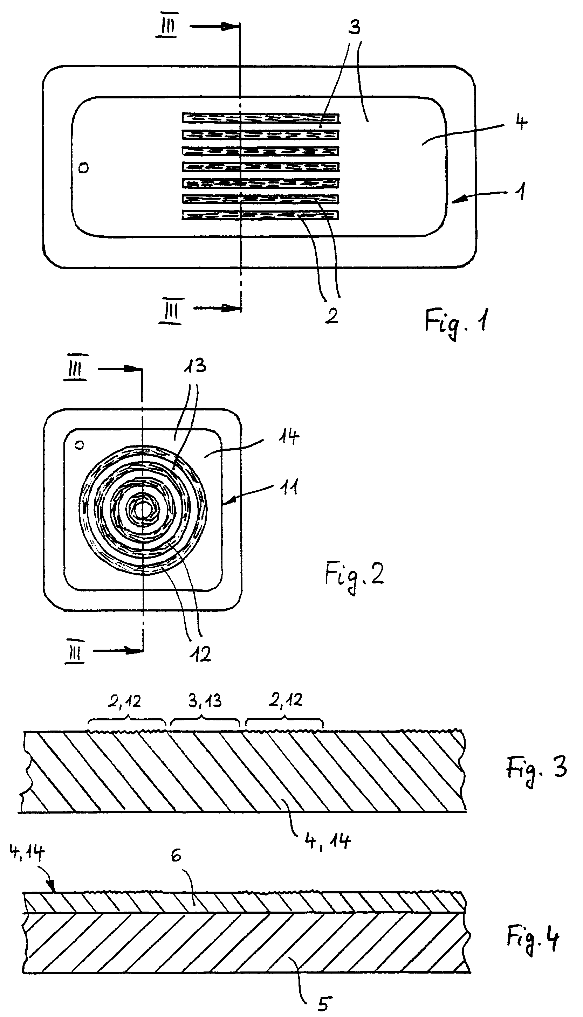

Figur 1 zeigt eine normale Badewanne 1 mit einem Boden 4, dessen Glanzoberfläche 3 mit Rutschhemmflächen 2 versehen ist, die als zueinander parallel liegende Streifen ausgebildet sind. Zwischen diesen Rutschhemmflächen 2 ist die Glanzoberfläche 3 unverändert. Diese Rutschhemmflächen 2 sind im vorliegenden Beispiel nur im Mittenbereich der Badewanne 1 angeordnet, nämlich in dem Bereich, in dem die badende Person meist steht, insbesondere beim Duschen. Es ist jedoch auch möglich, die streifenförmigen oder anders geformten Rutschhemmflächen 2 über die gesamte Länge des Bodens 4 anzuordnen, oder die gesamte Oberfläche der Badewanne 1 rutschhemmend auszubilden.

Figur 2 zeigt nun eine andere Ausführungsform bezüglich der Anordnung der Rutschhemmflächen. Es handelt sich in diesem Beispiel um eine etwa quadratische Duschwanne 11, deren Boden 14 mit Rutschhemmflächen 12 in der Form von konzentrischen Ringen angeordnet sind, zwischen denen unbehandelte Glanzoberflächenbereiche 13 stehen bleiben. Auch hier gilt, daß die gesamte Fläche des Bodens 14 als Rutschhemmfläche ausgebildet ist.

Figur 3 zeigt nun in vergrößerter Schnittansicht, wie die Glanzoberfläche 3 bzw. 13 des Bodens 4 bzw. 14 abschnittsweise mit Rutschhemmflächen 2 bzw. 12 entsprechend den Ausführungsformen nach den Figuren 1 und 2 versehen ist. Diese Rutschhemmflächen 2 bzw. 12 werden auf der Glanzoberfläche 3 bzw. 13 durch Aufrauhen der Glanzoberfläche 3 bzw. 13 gebildet. Dieses Aufrauhen erfolgt z.B. durch Strahlen mittels Elektrokorund, Glasperlen oder dergleichen, oder durch Ätzen, Bürsten oder Schleifen. Diesem Vorgang können alle Materialien unterzogen werden, von dessen Glanzoberfläche 3 bzw. 13 ohne Schaden für die sonstige Oberflächenstruktur in dünner Schicht aufgerauht werden kann. Hierfür eignet sich z.B. eingefärbtes Acrylglas oder Polymerbeton mit Gel-Coat. Dieses Verfahren kann jedoch auch bei emaillierten Stahlwannen angewandt werden, denn für das Aufrauhen der Glanzoberfläche 3 bzw. 13 in eine Rutschhemmfläche 2 bzw. 12 genügt eine sehr geringe Verformung oder ein geringer Abtrag, der die Oberfläche bzw. die Oberflächenbeschichtung kaum beeinträchtigt, da die entsprechenden Vertiefungen und gegebenenfalls Erhöhungen unterhalb eines Mikrometers liegen. In einem Beispiel erfolgte die Herstellung der Rutschhemmflächen 2 bzw. 12 durch Strahlen mit Elektrokorund mit einer Korngröße von ca. 0,2 mm. Es dürfte jedoch auch möglich sein, einen ähnlichen Effekt durch Ätzen, Bürsten oder Schleifen zu erreichen.

Diese aufgerauhten Rutschhemmflächen 2 bzw. 12 neigen zwar geringfügig zu einer stärkeren Verschmutzung als die Glanzoberfläche 3 bzw. 13 an den nicht behandelten Stellen. Da die Aufrauhung jedoch nur sehr gering ist, ist ein Reinigen auf einfache Weise möglich, z.B. durch einfaches Abziehen mit einer Wischlippe, was bei aufgeklebten Belägen nicht zum gewünschten Erfolgt führt. Um diesen Reinigungsvorgang jedoch nur in größeren Abständen durchführen zu müssen, können die Rutschhemmflächen 2 bzw. 12 eingefärbt sein. Dieses Einfärben kann dadurch erfolgen, daß z.B. beim Strahlen dem entsprechenden Strahlgut Farbpartikel beigemischt sind.

Ein anderer Aufbau der Wanne soll nun in Verbindung mit Figur 4 beschrieben werden. Figur 4 zeigt eine vergrößerte Schnittdarstellung des Bodens 4 bzw. 14 der Wanne 1 oder 11. Die Wanne bzw. der Boden besteht aus einem Trägermaterial 5, das eingefärbt ist, während eine Deckschicht 6 aus transparentem Material besteht, z.B. aus Acrylglas. Auf der Glanzfläche 3 bzw. 13 der Deckschicht 6 sind dann durch Aufrauhen die Rutschhemmflächen 2 bzw. 12 vorgesehen. Durch den zweischichtigen Aufbau der Wanne bzw. des Bodens 4 bzw. 14 fallen etwaige geringfügige Verschmutzungen der Oberfläche, insbesondere der Rutschhemmflächen 2 bzw. 12 weniger auf.

Die Herstellung der Rutschhemmflächen 2 bzw. 12 kann entweder an einer fertigen Wanne auf der Glanzoberfläche 3 bzw. 13 erfolgen. Wird die Wanne 1 bzw. 11 jedoch durch Tiefziehen aus einer Acrylglasplatte oder dergleichen Material hergestellt, so ist es zweckmäßig, die Rutschhemmflächen 2 bzw. 12 vor dem Tiefziehen anzubringen.

## Patentansprüche

1. Bade- oder Duschwanne (1, 11), bei der ein mit einer Glanzoberfläche (3, 13) versehener Boden (4, 14) mit Rutschhemmflächen versehen ist,
dadurch gekennzeichnet, daß
die vorzugsweise nur abschnittsweise vorgesehenen Rutschhemmflächen (2, 12) durch Aufrauhen der Glanzoberfläche (3, 13) gebildet sind.

2. Wanne nach Anspruch 1,
dadurch gekennzeichnet, daß sie aus einem Material besteht, dessen Glanzoberfläche (3, 13) ohne Schaden für die sonstige Oberflächenstruktur oder das Material in dünner Schicht aufzurauhen ist, wie z.B. eingefärbtes Acrylglas oder Polymerbeton mit Gel-Coat.

3. Wanne nach Anspruch 1 oder 2,
dadurch gekennzeichnet, daß die Rutschhemmflächen (2, 12) gegebenenfalls unter Anwendung von Abdeckmasken bei partieller Anordnung der Rutschhemmflächen, durch Strahlen (mit Elektrokorund, Glasperlen oder dergleichen), Ätzen, Bürsten oder Schleifen hergestellt sind.

4. Wanne nach Anspruch 3,
dadurch gekennzeichnet, daß die Herstellung der Rutschhemmflächen (2, 12) durch Strahlen mit einer Korngröße von ca. 0,2 mm erfolgt.

5. Wanne nach einem der Ansprüche 1 bis 4,
dadurch gekennzeichnet, daß die Rutschhemmflächen (2) in der Form von im Abstand voneinander angeordneten parallelen Streifen vorgesehen sind.

6. Wanne nach einem der Ansprüche 1 bis 4, insbesondere etwa quadratische Duschwanne (11),
dadurch gekennzeichnet, daß die Rutschhemmflächen (12) in der Form von im Abstand voneinander angeordneten konzentrischen Ringen vorgesehen sind.

7. Wanne nach einem der vorstehenden Ansprüche,
dadurch gekennzeichnet, daß im Fall partiell angeordneter Rutschhemmflächen (2, 12) diese zusätzlich eingefärbt sind.

8. Wanne nach einem der Ansprüche 1 bis 6,
dadurch gekennzeichnet, daß sie aus zwei übereinanderliegenden Schichten, einem Trägermaterial (5) und einer Deckschicht (6), besteht, wobei das Trägermaterial (5) eingefärbt und die Deckschicht (6) transparent ist.

9. Wanne nach einem der Ansprüche 1 bis 7,
dadurch gekennzeichnet, daß sie durch Tiefziehen aus einer Acrylglasplatte oder dergleichen hergestellt ist und daß die Anbringung der Rutschhemmflächen (2, 12) vor dem Tiefziehen erfolgt.
